# EUROPEAN PATENT APPLICATION

(11) **EP 0 652 691 A1**
(43) Date of publication of application: **10.05.1995**
(21) Application number: 94117209.0
(22) Date of filing: 31.10.1994
(51) Int. Cl.: H05B 41/02, H05B 41/29, H01J 61/56, F21V 23/02

(54) **A ballast device for a compact fluorescent lamp**

(30) Priority: 05.11.1993 KR 9323092 U; 11.10.1994 KR 9426438 U
(71) Applicant: Cho, Sung-Ho, Seoul (KR)
(72) Inventor: Cho, Sung-Ho, Seoul (KR)
(74) Representative: von Bülow, Tam, Dr.

(57) **Abstract**

A ballast device for a compact fluorescent lamp, comprises a ballast case including upper case 10-1, a lower case, and PCBs. The upper case has a incandescent lamp base 19 and the lower case has a socket substrate 11 having a compact fluorescent lamp socket. A bottom portion of the upper case is assembled with said lower case having a socket substrate 11. The PCBs includes a first PCB 15 where electronic circuit components 15-2 are mounted on, having a first receiving portion for allowing for the fluorescent lamp socket to be inserted in, and a second PCB 16 where a electronic circuit components 16-2 are mounted, and the mounted components 16-2 having long height are located in center area of the second PCB 16 to be located inside the bulb base 19.

## Description

### FIELD OF THE INVENTION

This invention relates to a compact fluorescent lamp apparatus having a ballast, a socket for the compact fluorescent lamp, and an incandescent lamp base fitting to a conventional incandescent lamp socket.

### BACKGROUND OF THE INVENTION

A florescent lamp (FL) has a high efficiency in emitting light. Thus, in order to use the FL lamp in stead of a incandescent lamp, a size of the FL lamp is made to be small. Trying to insert a small fluorescent lamp or the like into a bulb socket of the incandescent lamp results in further reduction of the lamp apparatus size including an electronic ballast.

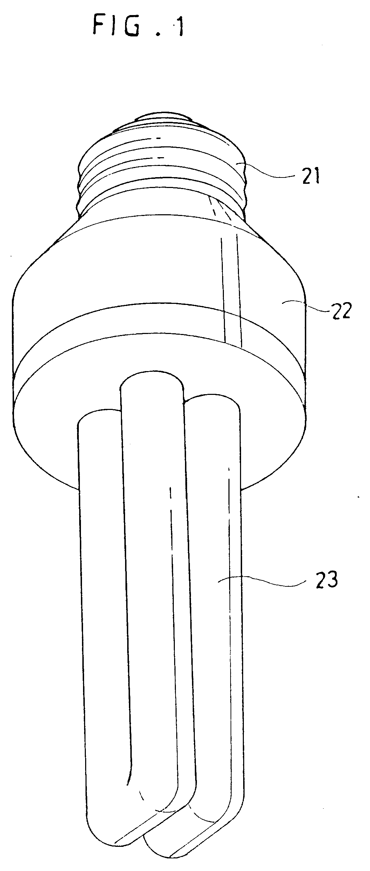

Fig. 1 shows a conventional compact fluorescent lamp apparatus having a ballast case 22 without a compact fluorescent lamp socket, a small fluorescent lamp 23 and a bulb base 21, which are integrated in one unit.

Although the lamp apparatus provides a convenience for its use, both of the socket and ballast are to be replaced with a new one when a life of a fluorescent lamp is ended. Therefore it causes to waste material sources.

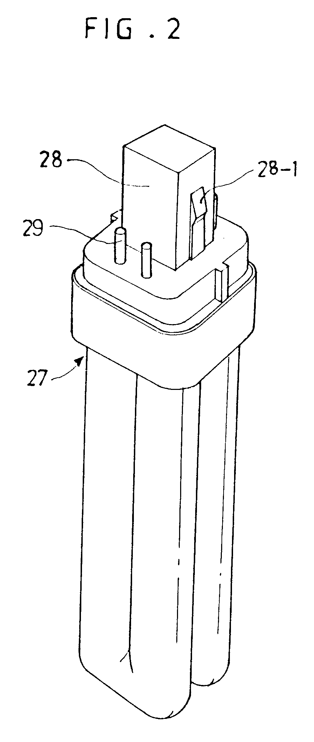

A compact fluorescent lamp shown in Fig. 2 has been commercially available. The compact fluorescent lamp has a plug 28 that can be fitted to a socket in a socket-type ballast, and four pins 29 for electric connection.

In order to use such compact fluorescent lamp, many types of ballast are produced. There are a type of electronic ballast that has a socket for accommodation of the compact fluorescent lamp plug, and has an incandescent bulb base for fitting to incandescent bulb socked.

However, it is continuous need to reduce a size of the conventional electronic ballast having a compact fluorescent lamp socket and a bulb base.

### SUMMARY OF THE INVENTION

It is an object of the invention to provide a ballast device for a compact fluorescent lamp which is able to maintain the compatibility with the conventional products with respect to the socket size for both of the bulb base and compact fluorescent lamp plug, and particularly to reduce the size of the ballast case.

The ballast device of the present invention includes a ballast case including upper case, a lower case, and a first and second printed circuit board(PCB).

The upper case has a conventional incandescent lamp base (bulb base) at its top portion, the lower case has a compact fluorescent lamp socket substrate. A bottom portion of the upper case is adapted to be assembled with the lower case.

The first PCB has electronic ballast circuit components mounted thereon, and has a first receiving portion for a fluorescent lamp socket formed in the lower case to be inserted.

The second PCB has electronic circuit components mounted thereon, and tall components are located in a center area of the second PCB in order to take a inner space of the bulb base in the upper case.

The electronic circuit components mounted on the first PCB are disposed around the side space of the fluorescent lamp socket, and the electronic circuit components mounted on the second PCB are disposed inside the bulb base.

Further a second receiving cavity may be formed in an area of the first PCB or the second PCB so that the components having long length can be inserted through the second receiving cavity.

The electronic circuit components of a long length are disposed in the vicinity of the second PCB center area so that electronic components having a long length can be located inside the incandescent lamp base.

The second PCB has narrow diameter than the first PCB, and the second PCB is located at a position in the region that a diameter of the upper case is decreasing.

The second PCB has a rectifier which receives the electric power through the power supply lines from the incandescent lamp base.

It is an another object of the present invention to provide a socket for a compact fluorescent lamp includes: a socket substrate having two pairs of through holes for accepting pins of a compact FL lamp, and having a receiving portion of a FL lamp socket plug; two pairs of terminal for connecting the pins of the Fl lamp to a ballast circuit; and a socket upper plate having receiving cavities for receiving top portions of the terminals, which cavity makes terminal top portions to be located therein.

When the upper plate of the socket is assembled with the socket substrate using the coupling means, the terminal serves as a limiting means for fixing a PCB having a ballast circuit.

Further object of the present invention is to provide a smaller size of a ballast device includes a ballast case having a upper case and a lower case, and a printed circuit board(PCB).

The upper case has a conventional incandescent lamp base at its top portion, the lower case has a compact fluorescent lamp socket substrate, and a bottom portion of the upper case is assembled with the lower case.

The PCB has electronic ballast circuit components mounted thereon, and has an opening for receiving a compact fluorescent lamp socket formed in the lower case.

The electronic circuit components mounted on the PCB are disposed around the side space of the fluorescent lamp socket, and the electronic circuit components mounted on the compact FL socket are spaced inside the bulb base when the case assembled.

Further alternatively a component receiving cavity may be formed in the PCB so that a tall component can be inserted through the component receiving cavity.

### BRIEF DESCRIPTION OF THE DRAWINGS

Fig. 1 is a perspective view showing a conventional ballast device combined with a small fluorescent lamp.

Fig. 2 is a perspective view showing a compact fluorescent lamp.

Fig. 3 is a perspective view showing a disassembled ballast device for a compact fluorescent lamp according to the present invention.

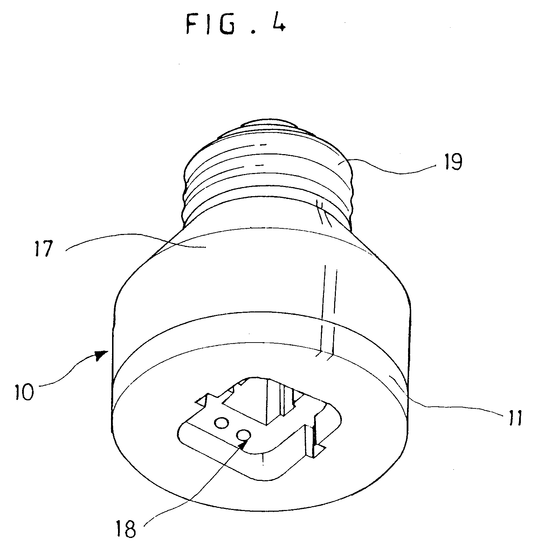

Fig. 4 is a perspective view showing an assembled ballast device according to the present invention.

Fig. 5 is a perspective view showing a disassembled ballast device for a compact fluorescent lamp according to the present invention.

Fig. 6 is a perspective view showing an assembled ballast device according to the present invention.

### DETAILED DESCRIPTION OF THE PREFERRED EMBODIMENT

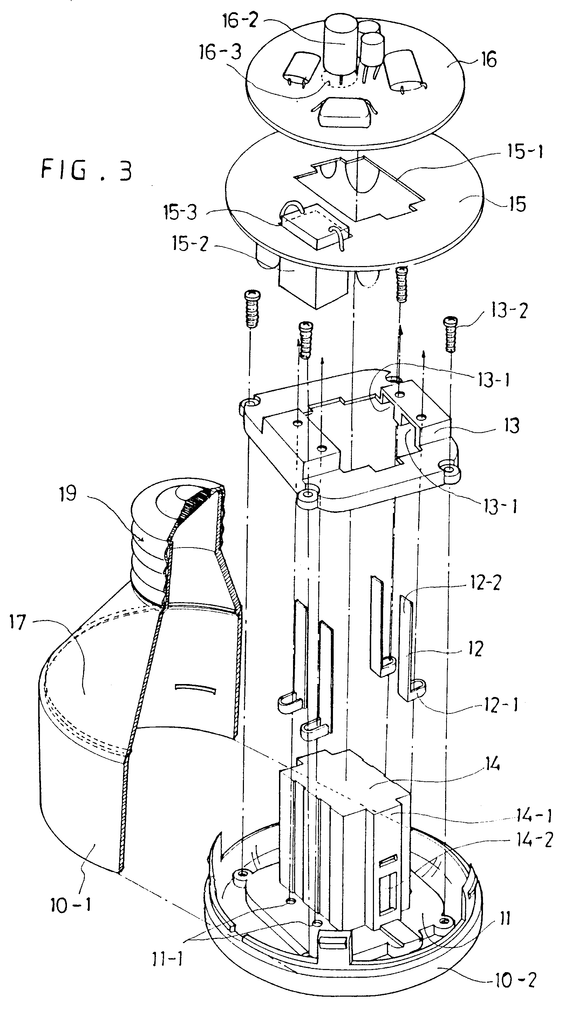

Fig. 3 shows one embodiment of the present invention. As shown in Fig. 3.

A ballast device of the present invention includes a ballast case 10 including upper case 10-1, a lower case 10-2, and a first printed circuit board(PCB) 15 and a second PCB 16.

The upper case 10-1 has a conventional incandescent lamp base 19 at its top portion, the lower case 10-2 has a compact fluorescent lamp socket substrate 11. A bottom portion of the upper case 10-1 is adapted to be assembled with the lower case 10-2.

Components constituting the ballast are mounted on each of a couple of Printed Circuit Boards(PCB) having a first PCB 15 on which the electric components are mounted and then disposed on the side surface of a plug receiving portion 14 which receives a plug 28 of a compact lamp 27, and a second PCB 16 on which the components are mounted and then disposed inside a bulb base 19, fully using a space of a ballast case 10.

There is provided with a component receiving cavity 15-3 or second receiving cavity in a selected area of a PCB so that an electric component 15-2 of a long length can be inserted through one of the selected area of the PCB in the case that the length of the electric components are enough to contact to end of the space in case. In order to make it easy for the long components to be mounted on ether PCB, the PCBs may have a plurality of component receiving cavities 15-3.

The first PCB has an opening 15-1 for the plug receiving portion to be inserted.

The compact fluorescent lamp socket of the lower case includes a socket substrate 11 having two pairs of through hole 11-1 for inserting pins 29 of compact fluorescent lamp, two pairs of terminal 12 which will contact with pins 29 of the lamp plug inserted into the through hole, and a socket upper plate 13 which has a receiving cavity 13-1 receiving the top portion of the terminals 12-1 and which is coupled with the substrate 11 by coupling means and then makes the terminal top portion locate in a desired position.

Each of a tail 12-2 of the terminal is connected to a terminal on a predetermined position of the first PCB 15 by mean of a soldering.

The lower case having a socket substrate 11, which constitutes a ballast case 10 with an upper case 10-1, has a plug receiving portion 14 so as to receive the plug 28 shown in Fig. 2 of the compact fluorescent lamp.

Inside the plug receiving portion 14 is installed a locking spring 14-2 which receives and locks a protrusion 28-1 of the plug 28.

The first PCB 15 includes the first receiving cavity 15-1 formed in center area of the PCB 15 where a top portion 14-1 of the plug receiving portion 14 may be inserted thereto, and the second receiving cavity 15-3 receiving the electric component of a long length, such as the condenser, transformer or the like.

The second PCB 16 having narrow diameter than the first PCB 15 locates at a certain position 17 where the diameter of the upper case 10-1 is decreasing. In the second PCB 16, electronic components 16-2 of a long length are located at a center area of the second PCB 16 so as to make the components consume a space inside the bulb base 19, thus electronic components of a long length can be located inside the bulb base 19.

And the second PCB 16 also may have the second receiving cavity 16-3 receiving the electric components 16-2 of a long length, such as the condenser, transformer or the like.

When the upper plate 13 of the socket is assembled with the socket substrate 11 by means of the coupling means such as the screw 13-2, the tail 12-2 of terminal 12 acts as the limiting means that makes the first PCB 15 unmovable to upward. The terminal is made of a conductive material.

The second PCB 16 has a rectifier which receives the power through the power supply lines from the bulb base 19 and is connected to the first PCB 15 by the conductive line, rod, wire, or the like.

The electrical wiring connects a pair of power lines from the bulb base 19 to the rectifying means in the second PCB 16 which outputs a rectified DC power connected to the well-known ballast circuit for the fluorescent lamp.

The ballast circuit generates high frequency power and is connected to the FL lamp for lighting the FL lamp through the terminals 12.

After the electrical wiring is connected, the upper case 10-1 is assembled with the lower case 10-2, to finish the assembling work of the ballast case 10.

The substantial use of this device can be made by inserting the compact fluorescent lamp 27 into the socket receiving part 14, and the bulb base is inserted to the bulb socket which is already installed on a wall or lamp stand.

With the compatibility with the conventional lamp apparatus with respect to the socket size for both of the bulb base and compact fluorescent lamp, the reduced size of the ballast case will increases the usefulness for the lamp apparatus.

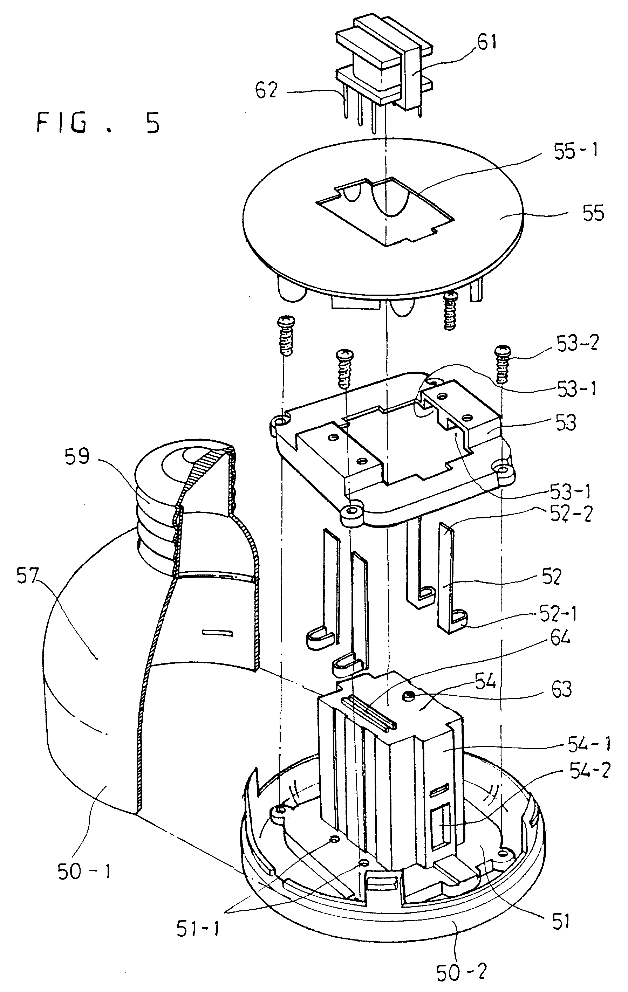

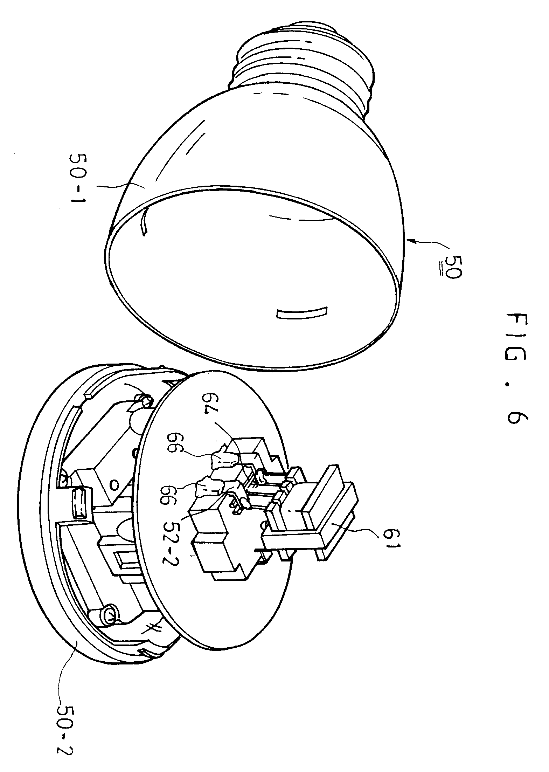

Another embodiment of the present invention is illustrated in Fig. 5, Fig. 6.

A ballast device of the present invention includes a ballast case 50 including upper case 50-1, a lower case 50-2, and a printed circuit board(PCB) 55.

The upper case 50-1 has a conventional incandescent lamp base 59 at its top portion, the lower case 50-2 has a compact fluorescent lamp socket substrate 51. A bottom portion of the upper case 50-1 is adapted to be assembled with the lower case 50-2.

Electronic components of a electronic ballast circuit are mounted on a Printed Circuit Boards(PCB) 55 and on a plug receiving portion 54 of compact FL lamp socket. The electronic components mounted on PCB 53 are disposed on the side surface of a plug receiving portion 54 which receives a plug 28 of a compact FL lamp 27, and components mounted on the plug receiving portion 54 disposed inside a bulb base 59, fully using a space of a ballast case 50.

The PCB has an opening 55-1 for the plug receiving portion 54 to be inserted.

The lower case 50-2 has a socket substrate 51 and a plug receiving portion 54 which receives the plug 28 shown in Fig. 2.

The compact fluorescent lamp socket formed in the lower case 50-2 includes a socket substrate 51 having two pairs of through hole 51-1 for inserting pins 29 of compact fluorescent lamp, two pairs of terminal 52 which will contact with pins 29 of the lamp plug, and a socket upper plate 53 which has a receiving cavities 53-1 receiving the top portion 52-1 of the terminals and which is coupled with the substrate 51 by coupling means and then makes the terminal top portion locate in a desired position.

Each of a tail 52-2 of the terminal is connected to a terminal 66 on a predetermined position of the PCB 55 by mean of a soldering.

The lower case 50-2 has a plug receiving portion 54, inside of which a locking spring 54-2 is installed for locking the plug 28.

The PCB 55 includes the opening 55-1 formed in center area where a top portion 54-1 of the plug receiving portion 54 may be inserted.

On a top portion of the plug receiving portion 54, an electronic component 61 of a long length are located so as to make the component 61 consume a inner space of the bulb base 19.
Such component may be a tall condenser, transformer or the like.

When the upper plate 53 is assembled with the socket substrate 51 by means of the coupling means such as the screw 53-2, the tail 52-2 of terminal 52 acts as the limiting means that makes the PCB 55 unmovable to upward. At the tail 52-2, a lead of the tall component 61 is connected.

The second PCB 16 has a rectifier which receives the power through the power supply lines from the bulb base 19 and is connected to the first PCB 15 by the conductive line, rod, wire, or the like.

Fig. 6 shows a semi-assembled state of the present invention. For electric wiring, two wires connect the lamp base to certain terminals of the ballast circuit.

The fully assembled device of the present invention may be used similarly as explained above.

## Claims

1. A ballast device for a compact fluorescent lamp comprising:
a ballast case including upper case and a lower case, the lower case having a compact fluorescent lamp socket, the upper case having an incandescent lamp base,
a first PCB for electronic circuit components to be mounted on, having a first receiving portion for allowing the compact fluorescent lamp socket formed in said lower case to be inserted, and
a second PCB for electronic circuit components to be mounted on, and the mounted components having long height being located in center area of the second PCB in order to take a inner space of the bulb base.

2. The ballast device as claimed in claim 1, wherein the electronic circuit components mounted on the first PCB are disposed around a side space of the fluorescent lamp socket,
a second receiving cavity is formed in said first PCB so that a tall component may be inserted therethrough

3. The ballast device claimed in claim 1,
wherein said second PCB has a narrow diameter than the first PCB, and the second PCB is located at a position where a diameter of the upper case is decreasing.

4. A socket for a compact fluorescent lamp comprising:
a socket substrate 11 having two pairs of through hole 11-1 for accepting pins of a compact FL lamp, and having a receiving portion 14 of a FL lamp socket plug;
two pairs of terminal 12 for connecting the pins of the Fl lamp to a ballast circuit; and
a socket upper plate 13 having receiving cavities 13-1 for receiving top portions 12-1 of the terminals 12, which cavity make terminal top portions 12-1 to be located in.

5. A socket for a compact fluorescent lamp as claimed in claim 4,
wherein when the upper plate 13 of the socket is assembled with the socket substrate 11 using the coupling means 13-2, the terminal 12 serves as a limiting means for fixing a PCB having electronic components constituting a ballast circuit.

6. A ballast device for a compact fluorescent lamp comprising a ballast case including upper case and a lower case, the lower case having a compact fluorescent lamp socket, the upper case having an incandescent lamp base, and a PCB for electronic circuit components to be mounted on, having a first receiving portion for allowing the compact fluorescent lamp socket formed in said lower case to be inserted, an improvement characterized in that the electronic circuit components mounted on the first PCB are disposed around a side space of the fluorescent lamp socket, and a tall electronic component is mounted on inner top portion of a plug receiving portion of a compact fluorescent lamp socket so that the tall component may be consume a inner space of the lamp base.

7. The ballast device claimed in claim 6,
wherein said tall electronic component is a transformer.
